# EUROPÄISCHE PATENTANMELDUNG

(11) **EP 4 818 648 A1**
(43) Veröffentlichungstag der Anmeldung: **07.10.2026**
(21) Anmeldenummer: 26165951.0
(22) Anmeldetag: 19.03.2026
(51) Int. Cl.: G01D 5/244

(54) **VORRICHTUNG ZUR LAGESICHERUNG**

(30) Priorität: 01.04.2025 DE 102025112778
(71) Anmelder: BOURNS, INC., Riverside CA 92507 (US)
(72) Erfinder: Madarász, Péter, 8441 Viola 5/e, Márkó (HU); Sommer, Andreas, 83209 Frühlingstraße 5, Prien (DE)
(74) Vertreter: von Bülow & Tamada

(57) **Zusammenfassung**

Offenbart wird eine Vorrichtung (40) zur Lagesicherung einer einen Drehwinkel zwischen einem Rotor und einem Stator bestimmenden Drehwinkelsensor (9) gegenüber einem Sensorträger um eine Rotationsachse (8), umfassend:
- einen Grundkörper (48),
- ein in Umfangsrichtung (44) um die Rotationsachse (8) gesehenes torsionssteifes Haltelager (52) zum Aufnehmen einer Torsionskraft aus dem Drehwinkelsensor (9), und
- eine am Haltelager (52) gehaltene Feder (50), die eingerichtet ist, eine Rückstellkraft auf den Sensorträger aufzubringen, mit wenigstens einem Federfuß (56) und einem sich in Bezug auf die Rotationsachse (8) zumindest teilweise axial (42) erstreckenden Federarm (54), welcher in Umfangsrichtung (44) um die Rotationsachse (8) gesehen eine nach vorn ausgerichtete Federarmseite (58) und der nach vorn ausgerichteten Federarmseite gegenüberliegende, nach hinten ausgerichtete Federarmseite (60) umfasst,
**dadurch gekennzeichnet, dass**
- der Federfuß (56) sowie wenigstens eine der Federarmseiten (58, 60) innerhalb des Grundkörpers (48) angeordnet sind.

## Beschreibung

Die vorliegende Erfindung betrifft eine Vorrichtung zur Lagesicherung gemäß dem Oberbegriff des geltenden Anspruchs 1.

Eine solche Vorrichtung ist aus der DE 10 2022 103 722 A1 bekannt.

Es ist Aufgabe der Erfindung, die bekannte Vorrichtung zu verbessern.

Die Aufgabe wird durch die Merkmale der unabhängigen Ansprüche gelöst. Bevorzugte Weiterbildungen sind Gegenstand der abhängigen Ansprüche.

Ausgehend von einer Vorrichtung zur Lagesicherung einer einen Drehwinkel zwischen einem Rotor und einem Stator bestimmenden Drehwinkelsensor gegenüber einem Sensorträger um eine Rotationsachse mit einem einen Grundkörper, mit einem ein in Umfangsrichtung um die Rotationsachse gesehenen torsionssteifen Haltelager zum Aufnehmen einer Torsionskraft aus dem Drehwinkelsensor und mit einer Feder, die eingerichtet ist, eine Rückstellkraft auf den Sensorträger aufzubringen, wobei die Feder wenigstens einen Federfuß und einen sich in Bezug auf die Rotationsachse zumindest teilweise axial erstreckenden Federarm besitzt, welcher wiederum in Umfangsrichtung um die Rotationsachse gesehen eine nach vorn ausgerichtete Federarmseite und der nach vorn ausgerichteten Federarmseite gegenüberliegende nach hinten ausgerichtete Federarmseite umfasst, sind der Federfuß sowie wenigstens eine der Federarmseiten erfindungsgemäß innerhalb des Grundkörpers angeordnet.

Der angegebenen Vorrichtung liegt die Überlegung zugrunde, dass bei der eingangs genannten Vorrichtung zur Lagesicherung ein Federarm verwendet wird, dessen Federfuß vollständig außerhalb des tragenden Gehäuse- oder Strukturkörpers liegt. Der Federarm ist dabei so gestaltet, dass er zwei gegenüberliegende Seiten aufweist - eine dem Grundkörper zugewandte und eine davon abgewandte -, sodass der gesamte Federarm einschließlich seines Ansatzpunktes in Umfangsrichtung außen an der tragenden Struktur angesetzt ist. Diese Anordnung führt dazu, dass die Spannungsverteilung im Bereich des Federfußs ungünstig verläuft, da der Federfuß in Umfangsrichtung um die Rotationsachse nach vorn oder hinten ausgerichtet ist und die Kraftübertragung so entlang der Umfangsrichtung wirkt, so dass sich die Materialbeanspruchung aufgrund von Torsion des Federfußes auf einen innenliegenden V-förmigen Ausschnitt zwischen Federarm und Grundkörper konzentriert. Wiederholter Torsionsbeanspruchungen führen langfristig zu Materialermüdung oder Rissbildung.

Hier greift die angegebene Vorrichtung mit der Überlegung an, die Richtung der Krafteinleitung sowie die Einbindung des Federfußes konstruktiv so zu verlegen, dass die Materialbeanspruchung im Bereich des Federfußes in Umfangsrichtung um die Torsionsbewegung besser verteilt wird. Dies wird erfindungsgemäß dadurch erreicht, dass der Federfuß sowie wenigstens eine der Federarmseiten innerhalb des Grundkörpers angeordnet werden, sodass der Federarm nicht mehr in Umfangsrichtung außen an den Grundkörper angesetzt ist, sondern in axialer Richtung in die tragende Struktur aufgenommen ist. Durch diese Ausrichtung des Federfußes in Richtung der Rotationsachse ergibt sich eine verbesserte Verteilung der mechanischen Spannungen im Übergangsbereich zwischen Federarm und Grundkörper am Federfuß, bei der Torsionskräfte nicht mehr über einen tangentialen Kontaktverlauf, sondern über einen axial gerichteten Einspannbereich in die Struktur eingebracht werden. Die axiale Ausrichtung ermöglicht eine flächigere Kraftübertragung in eine tiefere Materialzone des Grundkörpers und reduziert damit lokale Spannungsspitzen im Bereich des Federfußes signifikant. Gleichzeitig wird durch die Integration in den Grundkörper eine geometrische Führung geschaffen, die die Bewegung des Federarms begrenzt und eine Überlastung durch zu große Auslenkung verhindert. Eine zusätzliche Begrenzungswand ist grundsätzlich nicht mehr notwendig. Die resultierende Einspannung innerhalb des Grundkörpers bildet einen stabileren, richtungsoptimierten Lastpfad und erlaubt damit eine beanspruchungsgerechte Gestaltung der Verdrehsicherung, die mit der bekannten tangentialen Anbindung in der eingangs genannten Vorrichtung nicht erreichbar ist.

Durch die Reduktion von Spannungsspitzen, Materialermüdung und unkontrollierter Federwegüberschreitung im Bereich des Federfußes lassen sich mit der erfindungsgemäßen Vorrichtung deutlich reduzierte Ausfallraten im Betrieb erzielen. Die veränderte Kraftübertragung über einen axial ausgerichteten, innerhalb des Grundkörpers eingebetteten Federfuß führt zu einer gleichmäßigeren Spannungsverteilung und reduziert insbesondere die lokal konzentrierten Belastungsspitzen, die in der bekannten Bauweise als Ursache für Rissbildung oder Brüche identifiziert wurden. Dies wirkt sich positiv auf die Dauerfestigkeit des gesamten Bauteils aus und verlängert die Einsatzzeit auch unter zyklischer oder thermischer Belastung. Die geometrische Führung des Federarms innerhalb des Grundkörpers stellt darüber hinaus sicher, dass der Bewegungsweg des Federarms kontrolliert bleibt und mechanische Überlastungen durch übermäßige Auslenkung vermieden werden. Insgesamt ergibt sich eine robuste, serienstabile Lösung mit höherer Ausfallsicherheit, geringerem Wartungsbedarf und verbesserten Fertigungstoleranzen, da die funktionskritischen Belastungspunkte geometrisch definiert und konstruktiv geschützt geführt werden.

In einer Weiterbildung der angegebenen Vorrichtung umfasst der Grundkörper in Bezug auf die Rotationsachse in einer Axialrichtung gesehen eine umlaufende Grundkörperwand, innerhalb der der Federarm angeordnet ist. Auf diese Weise lässt sich der Federarm vollständig von einer tragenden Hohlstruktur umschließen, was nicht nur eine sichere und definierte axiale Einspannung ermöglicht, sondern zugleich eine geometrische Führung und mechanische Begrenzung des Federarms realisiert. Durch die umlaufende Wand kann der Bewegungsraum des Federarms gezielt festgelegt und eine Überbeanspruchung durch übermäßige Auslenkung mechanisch verhindert werden. Darüber hinaus ist der Federarm durch die umschließende Grundkörperwand zuverlässig vor äußeren Einflüssen wie Schmutz, mechanischem Kontakt oder thermischen Spitzen geschützt. Die Hohlstruktur erlaubt ferner eine bauraumoptimierte Integration in bestehende Gehäuseformen und bietet konstruktive Freiheiten bei der Anordnung mehrerer Federarme oder sensorischer Komponenten. Auch fertigungstechnisch ergeben sich Vorteile, da sich die Wandstruktur in einem geschlossenen Werkzeug besonders effizient als rotationssymmetrisches oder segmentiertes Spritzgussteil herstellen lässt.

In einer zusätzlichen Weiterbildung ist vorgesehen, dass die Grundkörperwand eine in Axialrichtung der Rotationsachse gesehene Aussparung besitzt, innerhalb der der Federarm angeordnet ist. Auf diese Weise wird der Federarm nicht nur räumlich innerhalb des Grundkörpers geführt, sondern zusätzlich durch eine seitlich und/oder axial begrenzte Struktur aufgenommen, die eine präzise und richtungsdefinierte Führung des Federarms ermöglicht. Die Anordnung in einer Aussparung verbessert die strukturelle Einbindung des Federarms, da sich die Spannungen aus dem Federarm kontrolliert in die umliegende Wandstruktur einleiten lassen und nicht punktuell auf eine außenliegende Verbindung konzentrieren. Darüber hinaus kann durch die Geometrie der Aussparung eine definierte Bewegungsbegrenzung des Federarms erreicht werden, die ungewollte Überauslenkungen unterbindet und somit die Lebensdauer des Bauteils erhöht. Die in der Wandstruktur eingelassene Anordnung bietet zugleich einen erhöhten Schutz des Federarms gegenüber mechanischen Beschädigungen oder Umwelteinflüssen und schafft konstruktive Freiheiten für weitere Integrationsmöglichkeiten, beispielsweise zur Aufnahme zusätzlicher Führungs- oder Dämpfungselemente.

In einer weiteren vorteilhaften Ausgestaltung ist vorgesehen, dass der Federfuß auf einer in Axialrichtung der Rotationsachse gesehenen Bodenseite der Aussparung angeordnet ist. Auf diese Weise wird der Federarm von seiner Fußzone her in axialer Richtung in die Grundkörperstruktur eingeleitet und dort flächig verankert. Die Krafteinleitung erfolgt somit entlang der Rotationsachse in die Wandtiefe der Aussparung hinein, wodurch sich eine besonders stabile Einspannung mit gleichmäßiger Spannungsverteilung erzielen lässt. Die Einbettung auf der Bodenseite ermöglicht eine verlustarme Rückführung der Biege- und Torsionskräfte in die umliegende Materialstruktur und minimiert kritische Spannungsspitzen, wie sie bei tangentialen oder seitlich angesetzten Einspannungen auftreten können. Zudem ergibt sich eine konstruktiv saubere Trennung zwischen aktivem Federbereich und dem passiven, kraftaufnehmenden Abschnitt des Grundkörpers, was sowohl für die Bauraumorganisation als auch für die Reproduzierbarkeit im Fertigungsprozess vorteilhaft ist.

Zudem kann vorgesehen sein, dass der Federarm in einem entspannten Zustand parallel zur Grundkörperwand ausgerichtet ist. Auf diese Weise ergibt sich eine lageoptimierte Ruhestellung des Federarms, bei der dieser ohne Vorspannung oder Auslenkung flächig entlang der Wandstruktur geführt ist. Die parallele Ausrichtung verbessert nicht nur die Führung des Federarms innerhalb der Aussparung, sondern trägt auch zu einer besonders kompakten Bauraumgestaltung bei, da der Federarm im unbelasteten Zustand keine zusätzlichen Volumina außerhalb der Wandkontur beansprucht. Darüber hinaus wird die Herstellung durch diese Formgebung vereinfacht, da sich die Federarmgeometrie leichter in rotationssymmetrische oder linear geführte Werkzeugformen integrieren lässt. Die parallele Ausrichtung unterstützt außerdem eine definierte und wiederholgenaue Auslenkcharakteristik bei Krafteinwirkung, da die Richtung der Auslenkung exakt orthogonal zur ursprünglichen Einbaulage erfolgt.

In einer weiteren vorteilhaften Ausgestaltung ist innerhalb der Grundkörperwand eine vorzugsweise radial zur Rotationsachse ausgerichtete Versteifungsrippe angeordnet. Auf diese Weise lässt sich die mechanische Steifigkeit der Wandstruktur gezielt erhöhen, insbesondere in radialer Richtung, in der durch die Wirkung des Federarms bei Auslenkung Biege- und Schubkräfte auftreten können. Die Versteifungsrippe wirkt als strukturelles Widerlager, das die Aufnahme und Ableitung dieser Kräfte unterstützt und gleichzeitig eine Verformung oder ungewollte Nachgiebigkeit der Wandstruktur verhindert. Dadurch wird die Position des Federarms innerhalb der Aussparung stabilisiert, und die Rückstellcharakteristik der Feder bleibt auch bei längerer Belastung oder Temperaturschwankungen konstant. Die Versteifungsrippe kann zusätzlich als Führungselement für den Federarm oder als Anlagefläche zur Bewegungsbegrenzung dienen, wodurch sich der Funktionsumfang des Bauteils konstruktiv erweitern lässt.

In einer weiteren zweckmäßigen Ausgestaltung ist die Grundkörperwand im Bereich des Haltelagers, von der Rotationsachse aus gesehen, konkav ausgebildet. Auf diese Weise ergibt sich eine formschlüssige Einbettung des Haltelagers in eine korrespondierend geformte Aufnahme, wodurch sich das Bauteil bei Montage selbst zentrieren und sicher gegen Relativverdrehung positionieren lässt. Die konkave Form unterstützt die gleichmäßige Verteilung von Umfangskräften, da sie ein großflächiges Anlageverhalten begünstigt und punktuelle Belastungskonzentrationen reduziert. Insbesondere bei der Aufnahme von Torsionsmomenten in Umfangsrichtung führt die konkave Geometrie zu einem verbesserten Kraftfluss in die angrenzenden Wandbereiche, was die Torsionssteifigkeit der Gesamtkonstruktion erhöht. Zusätzlich kann die konkave Ausformung als definierte Anlagefläche für zusätzliche Sicherungselemente, etwa Rastnasen oder Passstrukturen, genutzt werden.

In einer weiteren Ausgestaltung weist die Grundkörperwand, gesehen von der Rotationsachse aus, dem Haltelager gegenüberliegend eine in einen durch die Grundkörperwand umschlossenen Innenraum hinein gerichtete Wölbung auf. Auf diese Weise entsteht eine lokal vorstehende Struktur innerhalb des Innenraums, die einer gezielten Verstärkung, Funktionserweiterung oder Geometrieanpassung dient. Die Wölbung kann dabei als Anlage- oder Begrenzungsfläche für den Federarm genutzt werden, etwa zur definierten Bewegungseinschränkung oder zur Positionierung im unbelasteten Zustand. Gleichzeitig wirkt die Wölbung strukturell als zusätzliche Versteifung der Wandstruktur, indem sie die Biegesteifigkeit in axialer Richtung erhöht und die Formstabilität des Innenraums unterstützt. Die Wölbung kann zudem zur Aufnahme weiterer Funktionselemente dienen, etwa von Dämpfungszonen, Führungsnoppen oder integrierten Rastnasen. Durch die gezielte Anordnung auf der dem Haltelager gegenüberliegenden Seite wird außerdem eine gleichmäßigere Materialverteilung innerhalb der Grundkörperwand erreicht, was Spannungsdifferenzen bei Torsionsbelastung reduziert.

In einer weiteren Ausgestaltung besitzt der Grundkörper in Umfangsrichtung um die Rotationsachse gesehen an der Rückseite und/oder an der Vorderseite eine in Umfangsrichtung ausgerichtete Anschlagwand. Auf diese Weise wird eine definierte mechanische Begrenzung geschaffen, die die Bewegung entweder des Federarms oder des gesamten Gehäuses bzw. Grundkörpers relativ zum Sensorträger einschränkt. Die Anschlagwand wirkt als formschlüssiges Rückhaltelement bei Auslenkung in Umfangsrichtung und verhindert, dass die Feder über ihren vorgesehenen Arbeitsbereich hinaus beansprucht wird. Dies trägt zur Langlebigkeit des Bauteils bei und reduziert die Gefahr von Materialermüdung durch übermäßige Verformung. Je nach Anordnung an der Vorder- und/oder Rückseite kann die Anschlagwand als einseitiger oder beidseitiger Endanschlag fungieren und optional zur Justierung oder Verrastung des Bauteils im Einbauzustand dienen. Zudem unterstützt sie eine bauraumdefinierende Integration in umliegende Gehäuse- oder Lagerstrukturen.

Gemäß einem weiteren Aspekt der Erfindung umfasst ein Drehwinkelsensor zum Erfassen eines Drehwinkels zwischen einem Rotor und einem Stator, den Rotor und den Stator mit einem Gehäuse und einer Leiterplatte zur Auswertung eines vom Rotor beeinflussten Geberfeldes, sowie eine der angegebenen Vorrichtungen, zum Sichern einer Drehlage des Gehäuses gegenüber einem Sensorträger um eine Rotationsachse. Durch die Integration einer der angegebenen Vorrichtungen zur Lagesicherung in den Drehwinkelsensor ergeben sich mehrere Vorteile für die Sensorfunktion selbst. Insbesondere wird durch die richtungsdefinierte, strukturell stabile Anbindung des Gehäuses eine reproduzierbare Fixierung der Statorposition relativ zum Rotor erreicht, wodurch Messgenauigkeit, Wiederholgenauigkeit und Thermostabilität des Sensors verbessert werden. Darüber hinaus wird die Langzeitstabilität der Kalibrierung erhöht, und der Montageprozess vereinfacht, was sich positiv auf die Gesamtzuverlässigkeit des Sensorsystems auswirkt.

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 eine strukturelle Ansicht eines Fahrzeuges mit einem Sensor zum Erfassen eines Drehwinkels und eines Drehmomentes,
Fig. 2 eine strukturelle Ansicht des Sensor zum Erfassen eines Drehwinkels und eines Drehmomentes aus Fig. 1,
Fig. 3a eine Strukturansicht einer herkömmlichen Vorrichtung zur Lagesicherung des Sensors der Fig. 1 in dem Fahrzeug,
Fig. 3b eine Strukturansicht einer erfindungsgemäßen Vorrichtung zur Lagesicherung des Sensors der Fig. 1 in dem Fahrzeug,
Fig. 4 eine perspektivische Ansicht der erfindungsgemäßen Vorrichtung gemäß einer ersten Ausführung, und
Fig. 5 eine perspektivische Ansicht der erfindungsgemäßen Vorrichtung gemäß einer zweiten Ausführung.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

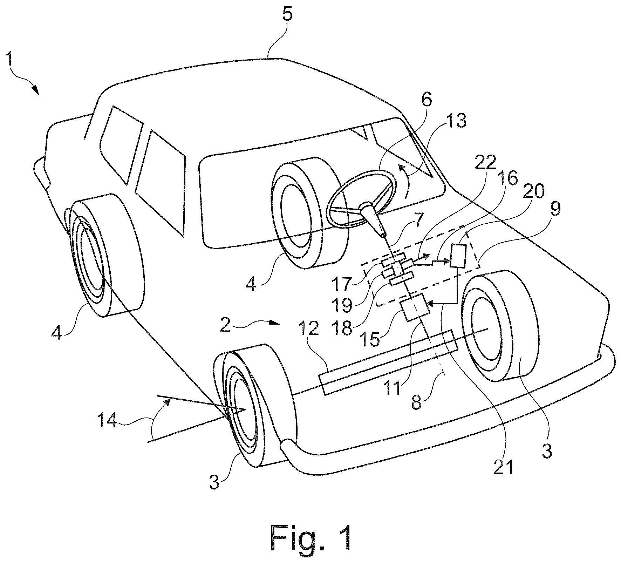

Es wird auf Fig. 1 Bezug genommen, die schematisch eine perspektivische Ansicht eines Fahrzeuges 1 mit einem Lenksystem 2 zeigt.

Das Fahrzeug 1 umfasst im vorliegenden Ausführungsbeispiel ein auf zwei Vorderrädern 3 und auf zwei Hinterrädern 4 getragenes Chassis 5. Die Vorderräder 3 können dabei über das Lenksystem 2 eingeschlagen werden, damit mit dem Fahrzeug 1 eine Kurve gefahren werden kann. Das Lenksystem 2 umfasst ein Lenkrad 6, das auf eine erste Lenkwelle 7 aufgesetzt ist, die wiederum um eine Rotationsachse 8 drehbar angeordnet ist. Die erste Lenkwelle 7 ist in einen Sensor 9 zur Erfassung einer Position, hier in Form einer Winkelposition, geführt und dort in nicht weiter spezifizierter Weise mit einem Torsionselement 10 verbunden. Das Torsionselement weist eine frei wählbare Federhärte auf, die vorzugsweise konstant und linear gewählt sein sollte, und überführt so ein appliziertes Drehmoment in einen messtechnisch erfassbaren Drehmomentenwinkel. An dieses Torsionselement 10 schließt sich auf der der ersten Lenkwelle 7 gegenüberliegenden Seite auf der Rotationsachse 8 eine zweite Lenkwelle 11 an, die wiederum in einem Lenkgetriebe 12 endet. Wird das Lenkrad 6 mit einem Drehmoment in Form eines Lenkmomentes 13 gedreht, wird das Lenkmoment 13 entsprechend über die Lenkwellen 7, 11 an das Lenkgetriebe 12 übertragen, welches als Reaktion darauf die Vorderräder 3 für die Kurvenfahrt mit einem Radeinschlag 14 einschlägt.

Der Lenkvorgang wird mit einem Hilfsmotor 15 unterstützt, der die zweite Lenkwelle 11 hilfsweise mitdreht. Hierzu wird das Lenkmoment 13 aus einem Drehwinkelunterschied 16 zwischen der ersten Lenkwelle 7 und der zweiten Lenkwelle 11 abgeleitet, die mit dem induktiven Sensor 9 erfasst wird. Der Hilfsmotor 15 dreht dann unter anderem in Abhängigkeit des erfassten Lenkmomentes 13 die zweite Lenkwelle 11.

Zur Erfassung des zuvor genannten Drehwinkelunterschieds 16 und damit des Lenkmomentes 13 umfasst der Sensor 9 eine mit der ersten Lenkwelle 7 verbundene Feinspur 17 und eine mit der zweiten Lenkwelle 11 verbundene Grobspur 18, auf die an späterer Stelle näher eingegangen wird. Der Sensor 9 umfasst ferner eine ortsfest mit dem Fahrzeug 1 verbundene Messschaltung 19, welche eine Winkelposition der Feinspur 17 sowie eine Winkelposition der Grobspur 18 erfasst und daraus den Drehwinkelunterschied 16 bestimmt. Auch hierauf wird an späterer Stelle näher eingegangen. Basierend auf dem Drehwinkelunterschied 16 kann nun eine Steuereinrichtung 20 mit einem geeigneten Steuersignal 21 den Hilfsmotor 15 ansteuern.

Neben dem Drehwinkelunterschied 16 bestimmt die Messschaltung 19 des Sensor 9 darüber hinaus noch ein Drehwinkel 22 der Gesamtlenkwelle 7, 11, um diese beispielsweise in einem Fahrdynamiksystem zu nutzen.

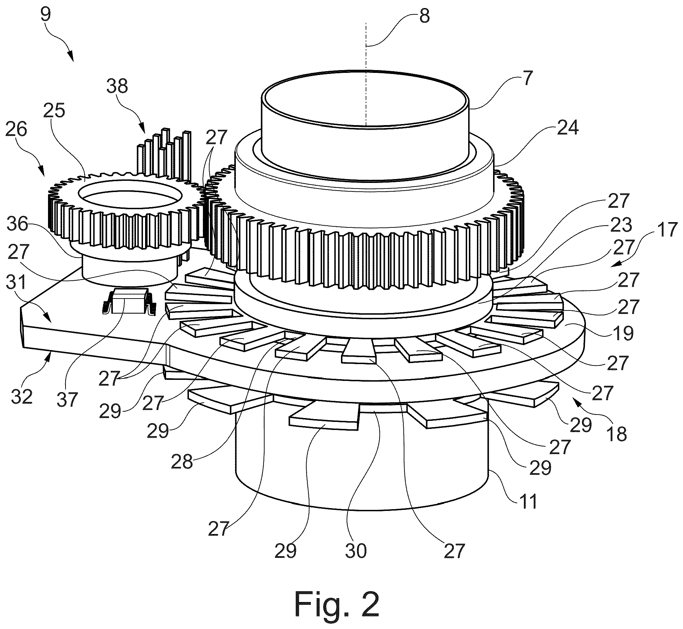

Der Aufbau des Sensors 9, der der Erläuterung des vorliegenden Ausführungsbeispiels zugrunde liegt, wird nachstehend anhand der Fig. 2 näher erläutert.

Während die Grobspur 18 unmittelbar an der zweiten Lenkwelle 11 drehfest befestigt ist, ist die Feinspur 17 über eine Tragehülse 23 an der ersten Lenkwelle 7 gehalten. An dieser Tragehülse 23 ist ferner noch ein Antriebsrad 24 drehfest gehalten, welches in einer noch zu beschreibenden Weise ein Abtriebsrad 25 für eine Multiwinkelerfassungseinrichtung 26 antreibt.

Die Feinspur 17 ist in der vorliegenden Ausführung als Flügelrad mit einer Feinspuranzahl an Feinspurflügeln 27 aus Metall ausgeführt. Die einzelnen Feinspurflügel 27 sind in Umfangsrichtung um die erste Lenkwelle 7 gesehen äquidistant verteilt und an einem Feinspurträger 28 gehalten. Für die weiteren Erläuterungen soll von einer Feinspuranzahl von zwölf Feinspurflügeln 27 ausgegangen werden, obwohl in Fig. 2 deutlich mehr Feinspurflügel 27 dargestellt sind.

Analog dazu ist auch die Grobspur 18 in der vorliegenden Ausführung als Flügelrad mit einer Grobspuranzahl an Grobspurflügeln 29 aus Metall ausgeführt. Auch die einzelnen Grobspurflügel 29 sind in Umfangsrichtung um die erste Lenkwelle 7 gesehen äquidistant verteilt analog zur Feinspur 17 an einem Grobspurträger 30 gehalten. Für die weiteren Erläuterungen soll von einer Grobspuranzahl von acht Grobspurflügeln 29 ausgegangen werden. Von diesen Grobspurflügeln 29 sind in der Perspektive der Fig. 2 nicht alle Grobspurflügel zu sehen.

Mit dem Grobspurflügel 29 und die Feinspurflügel 27 kann die Messschaltung 19 den Drehwinkel 22 bestimmen. Hierzu kann die Messschaltung 19 grundsätzlich wie in der EP 3 865 824 A1 beschrieben ausgeführt sein.

Die Messschaltung 19 besitzt eine zu den Feinspurflügeln 27 gerichtete Feinspurseite 31 und eine zu den Grobspurflügeln 29 gerichtete Grobspurseite 32. Auf jeder Seite der Messchaltung 19 ist eine nicht weiter dargestellte ein vorzugsweise hochfrequentes Magnetfeld erregende Sendespule und mindestens eine nicht weiter dargestellte Empfangsspule angeordnet, in der durch das Magnetfeld eine Spannung induziert wird. Auf der Feinspurseite 31 wird damit in der entsprechenden Empfangsspule ein Feinspursignal erregt, während auf der Grobspurseite 32 in der entsprechenden Empfangsspule ein Grobspursignal erregt wird.

In diesem Aufbau der Messschaltung 19 stören die Flügel 27, 29 das von der jeweiligen Sendespule erzeugte Magnetfeld, wodurch sich das Feinspursignal und das Grobspursignal abhängig vom Drehwinkel der jeweiligen Spur 17, 19 verändert. Dieser grundsätzliche Aufbau kann erweitert werden, um beispielsweise das Messsystem robuster gegen Messfehler zu gestalten. Eine solche Erweiterung ist in der bereits zitierten EP 3 865 824 A1 diskutiert. Auf derartige Erweiterungen kommt es zum Verständnis der vorliegenden Ausführung allerdings nicht an.

Im Ergebnis kommt es zum Verständnis der Ausführungsform nur darauf an, dass die Flügel 27, 29 der Spuren 17, 18 für Spursignale sorgen, die sich periodisch mit der Winkellage der jeweiligen Spur 17, 18 ändern.

Neben den Spursignalen gibt zudem noch die Multiwinkelerfassungseinrichtung 26 ein Magnetwinkelsignal aus. Dieses Magnetwinkelsignal wird in einem Magnetsensorelement 37 basierend auf einem radial magnetisierten Magnet 36 erzeugt, der an der zur Leiterplatte 19 gerichteten Seite des Abtriebsrades 25 angeordnet ist und durch das Abtriebsrad 25 über dem Magnetsensorelement 37 gedreht wird.

Aus den Spursignalen und dem Magnetwinkelsignal wird auf der Leiterplatte 19 dann der Drehwinkel 22 der Gesamtlenkwelle 7, 11 berechnet und über eine Ausgabeschnittstelle 38 ausgegeben.

Bei dem vorstehend beschriebenen Sensor 9 ist die Messschaltung 19 ortsfest mit dem Fahrzeug 1 verbunden und somit relativ zur Rotationsachse 8 fixiert. Damit die Winkelpositionen der Feinspur 17 und der Grobspur 18 korrekt detektiert werden können, ist es erforderlich, dass die Messschaltung 19 - und damit das diese tragende Gehäuse - in seiner Drehlage exakt gegen Verdrehung relativ zur Rotationsachse 8 gesichert ist.

Während dies in Umfangsrichtung - also um die Rotationsachse 8 - durch eine geeignete Verdrehsicherung erfolgen muss, stellt sich darüber hinaus auch die Herausforderung einer radialen Lagesicherung des Gehäuses relativ zur Rotationsachse 8. Denn durch Fertigungstoleranzen, thermische Ausdehnung oder Einbaukräfte kann es zu einer radialen Versetzung oder Neigung des Gehäuses kommen, die im Ergebnis zu einer Verlagerung der Sendespulen und Empfangsspulen der Messschaltung 19 gegenüber den Flügeln 27, 29 oder gegenüber dem Magnet 36 führt.

Eine solche radiale Lageabweichung kann insbesondere bei der Verwendung hochfrequenter magnetischer Felder zu einer Änderung der Kopplungscharakteristik zwischen Spule und Spurflügel führen, was wiederum die Amplitude und Phasenlage der empfangenen Spursignale beeinflussen kann. Dies gilt analog auch für das Magnetwinkelsignal des Magnetsensorelements 37. Bereits geringe Positionsabweichungen im Submillimeterbereich können zu systematischen Messfehlern oder einer erhöhten Temperaturempfindlichkeit der Winkelsignale führen.

Vor diesem Hintergrund ist eine präzise und dauerhaft stabile radiale Positionierung der Messschaltung 19 relativ zu einem ortsfest zum Chassis 5 des Fahrzeuges 1 gehaltenen Sensorträger besonders wichtig. Eine radiale Lageabweichung der Messschaltung 19, beispielsweise infolge von Fertigungstoleranzen, Temperatureinflüssen oder mechanischer Belastung im Einbauzustand, kann zu einer Verschiebung der Lage der Sendespulen und Empfangsspulen relativ zu den Feinspurflügeln 27, den Grobspurflügeln 29 oder dem Magnet 36 führen. Diese Verschiebung beeinflusst die Kopplung zwischen Spulen und Flügelstrukturen beziehungsweise dem Magnetfeld, was die Amplitude, Phasenlage oder Linearität der erfassten Spursignale und des Magnetwinkelsignals verändern kann. Um dies zu vermeiden, muss die Messschaltung 19 lagegenau und formschlüssig relativ zum Sensorträger und damit zum Chassis 5 gehalten werden.

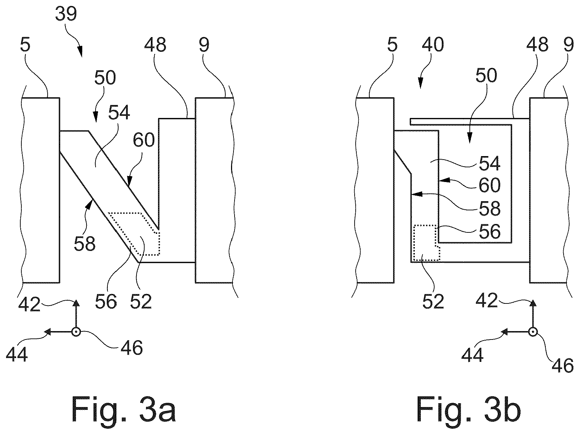

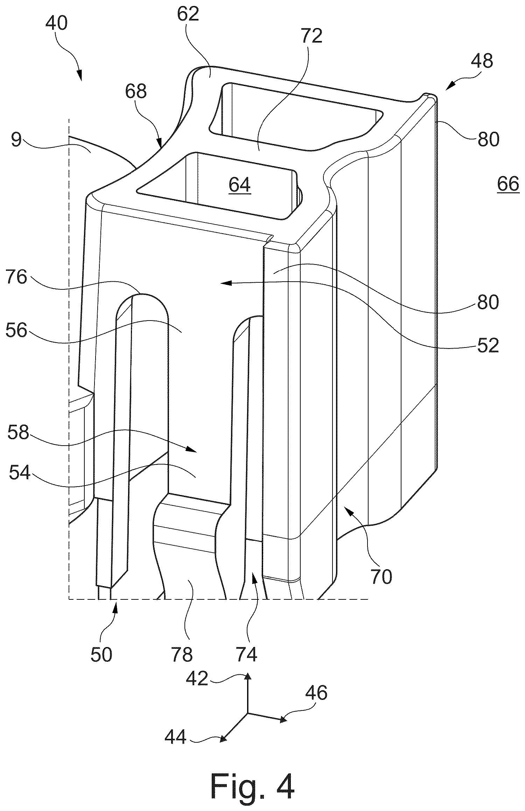

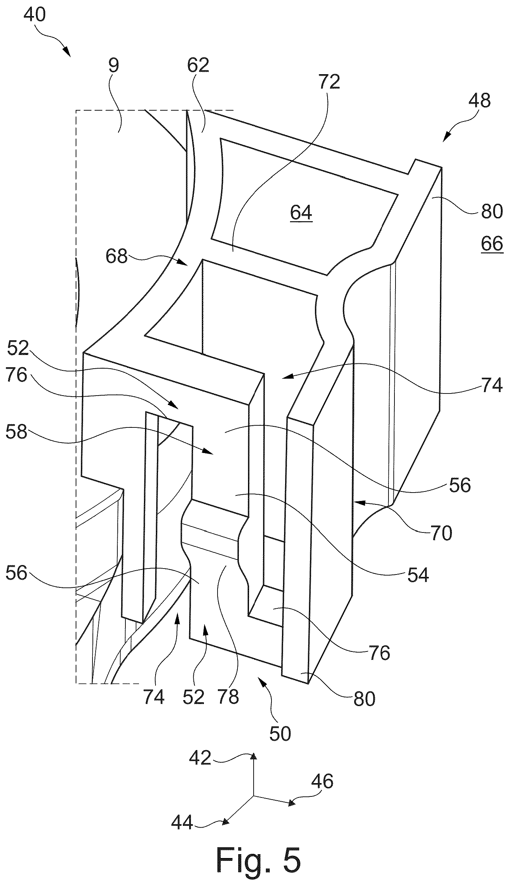

Hierzu kommt eine Vorrichtung 40 zur Lagesicherung des Sensors 9 in dem Fahrzeug 1 gegenüber dem Sensorträger und damit dem Chassis 5 zum Einsatz, die zunächst anhand der Figs. 3a und 3b vom Prinzip her erläutert werden soll. Dabei illustriert Fig. 3a das Prinzip einer herkömmlichen Vorrichtung 39, wie sie aus der DE 10 2022 103 722 A1 bekannt ist und Fig. 3b eine Vorrichtung 40 gemäß der vorliegenden Erfindung. Zur Vereinfachung der weiteren Darstellungen sollen die Vorrichtungen 39, 40 nachstehend in einem Zylinderkoordinatensystem mit einer parallel zur Rotationsachse 8 verlaufenden Axialrichtung 42, einer umfänglich um die Rotationsachse 8 verlaufenden Umfangsrichtung 44 und einer quer zur Axialrichtung 42 und quer zur Umfangsrichtung 44 verlaufenden Radialrichtung 46 betrachtet werden. Wichtig für das Funktionsverständnis ist in diesem Zusammenhang, dass das der Sensor 9 sich nicht zwangsläufig in Umfangsrichtung 44 hinter der Vorrichtung 39, 40 befinden muss. Im Betrieb befindet sich der Sensor 9 in der Regel in Radialrichtung 46 gesehen hinter der Vorrichtung 39, 40 was in den späteren Figs. 4 und 5 konkret gezeigt ist.

Die sowohl die herkömmliche Vorrichtung 39 als auch die erfindungsgemäße Vorrichtung 40 besitzen einen Grundkörper 48 und einen Feder 50, der über ein Haltelager 52 am Grundkörper 48 gehalten ist. Die Feder 50 soll eine entgegen der Umfangsrichtung 44 ausgerichtete Rückstellkraft auf den Sensorträger und damit das Chassis 5 aufzubringen, um den Sensor 9 in der zuvor beschriebenen Weise in der Umfangsrichtung 44 fest zu positionieren.

Wie in der DE 10 2022 103 722 A1 ist die Möglichkeit, die Rückstellkraft über vom Grundkörper 48 unabhängige Federn aufzubringen kostenintensiv, kompliziert in der Herstellung und wartungsintensiv, weshalb eine einstückige Herstellung der Feder 50 mit dem Grundkörper 48 vorgeschlagen wird. Die Feder 50 dieser bekannten Vorrichtung 39 weist einen Federarm 54 auf, der über einen Federfuß 56 an das Haltelager 52 und damit an den Grundkörper 48 angebunden ist.

Die herkömmliche Vorrichtung 39 weist in der Umfangsrichtung 44 gesehen eine erste Federarmseite 58, die zum Sensorträger und damit zum Chassis 5 gerichtet ist sowie eine zweite Federarmseite 60 auf, die zum Grundkörper 48 gerichtet ist. Die DE 10 2022 103 722 A1 lehrt, dass die zweite Federarmseite zum Grundkörper 48 gerichtet sein muss, was zur Folge hat, dass der gesamte Federfuß 56 und das Haltelager 52 sich in der Umfangsrichtung 44 gesehen vor dem Grundkörper 48 befinden, und der Federarm 54 spitzwinklig zum Grundkörper 48 verlaufen muss, da sonst keine Rückstellkraft aufgebracht werden kann.

Diese Spitzwinkligkeit des Federarms 54 zum Grundkörper 48 zur Axialrichtung 42 und damit zur Rotationsachse 8 bringt jedoch mehrere nachteilige Effekte mit sich. Zunächst führt der spitze Winkel zwischen dem Verlauf des Federarms 54 und der Axialrichtung 42 zu einem ungünstigen Kraftfluss im Bereich des Federfußes 56. Die durch die Feder 50 aufzubringende Rückstellkraft muss im Wesentlichen entgegen der Umfangsrichtung 44 wirken, während der Federarm 54 in einem stark geneigten Winkel in den Grundkörper 48 einläuft. Dadurch entsteht vor allem an der Stelle des spitzen Winkels im Bereich des Federfußes 56 eine Torsions- und Biegebelastung, die deutlich größer ist, als die mechanische Beanspruchung auf der in der Axialrichtung 42 gesehenen gegenüberliegenden Unterseite der herkömmlichen Vorrichtung 39. Dies führt zu einer ungünstigen Kraftumlenkung, die eine lokale Spannungserhöhung im Material an der Stelle des Spitzen Winkels verursacht und die Gefahr von Materialermüdung oder Rissbildung im Übergangsbereich zwischen Federfuß 56 und Haltelager 52 spürbar erhöht.

Zudem ist durch die spitzwinklige Anordnung ein langer, schräg verlaufender Federarm 54 erforderlich, um überhaupt die gewünschte Rückstellkraft entgegen der Umfangsrichtung 44 aufbringen zu können. Dies wirkt sich ungünstig auf den absolut notwendigen Bauraum aus, da die Feder 50 in Umfangsrichtung 44 und Axialrichtung 42 spürbar vom Grundkörpers 48 wegstreben muss, um den dem Federfuß 56 gegenüberliegenden Federkopf ausreichend weit vom Grundkörper 48 zu positionieren. Je weniger Bauraum zur Verfügung steht, desto schwieriger gestaltet sich dann die Integration des Sensors 9 in entpsrechend kompakte Module oder Gehäuseformen.

Nicht zuletzt ergibt sich aus der geometrischen Spitzwinkligkeit ein eingeschränkter Bewegungsweg des Federarms in Richtung seiner Hauptauslenkung. Bei einer Auslenkung in Richtung des Sensorträgers kann es zu einer raschen Zunahme der Biegebelastung kommen, was die effektive Federwirkung begrenzt und das Risiko einer Überlastung bei Stoß- oder Dauerbelastung erhöht.

Hier greift die erfindungsgemäße Vorrichtung 40 mit der Idee an, den Federfuß 56 sowie wenigstens die zweite Federarmseite 60 innerhalb des Grundkörpers 48 anzuordnen. Durch diese Anordnung wird es möglich, den Federarm 54 in einem im Wesentlichen rechtwinkligen Verlauf zur Umfangsrichtung 44 auszurichten, sodass sich der Federarm bei einer Verdrehung des Sensorträgers entlang einer Linie bewegt, die orthogonal zur Richtung der aufzubringenden Rückstellkraft verläuft. Dies hat mehrere technische Vorteile: Zum einen wird dadurch eine kraftflussgerechte Materialbeanspruchung erzielt, da die Rückstellkraft der Feder 50 nun quer zur Hauptausdehnungsrichtung des Federarms 54 übertragen wird. Die Biegebeanspruchung verteilt sich gleichmäßiger über das Haltelager 52, wodurch Spannungsspitzen im Material reduziert werden.

Zum anderen kann durch die rechtwinklige Geometrie eine kürzere und kompaktere Federstruktur realisiert werden, bei der die Kraftübertragung linearer und definierter erfolgt. Die Federkennlinie ist besser dimensionierbar, da keine schrägen Biegepfade vorliegen, die sich nichtlinear auf die Rückstellkraft auswirken. Dadurch verbessert sich die Reproduzierbarkeit des Federverhaltens, insbesondere bei wechselnden Temperaturen oder bei dauerhaften dynamischen Belastungen im Fahrbetrieb.

Zudem lässt sich die rechtwinklige Einbaulage in den Grundkörper 48 fertigungstechnisch einfacher und robuster umsetzen, da die Formgebung klar definierte Wandverhältnisse bietet, an denen sich die Feder führen und stützen lässt.

Nachstehend wird anhand von Fig. 4 eine konkrete Ausführung der erfindungsgemäßen Vorrichtung 40 beschrieben.

Der Grundkörper der Vorrichtung 40 der Fig. 4 ist im Wesentlichen hohlzylindrisch aufgebaut und besitzt eine um die Axialrichtung 42 umlaufende Grundkörperwand 62, die einen Innenraum 64 von einem Außenraum 66 trennt. Wie bereits weiter oben angedeutet befindet sich die Feder 50 in Umfangsrichtung 44 gesehen an der Vorderseite der Vorrichtung 40, während die Vorrichtung 40 in Radialrichtung 46 gesehen an der Rückseite am Sensor 9 befestigt ist. Die Befestigung kann über Befestigungsmittel erfolgen, sie kann aber auch über eine einstückige Ausführung mit Teilen des Sensors 9 wie beispielsweise einem die Komponenten einhausenden Gehäuse erfolgen.

Unter einer einstückigen Ausführung ist dabei zu verstehen, dass der Grundkörper 48 - gegebenenfalls gemeinsam mit dem Sensorbauteil - in einem einheitlichen Formgebungsverfahren, insbesondere durch Spritzguss, aus einem durchgehenden Materialkörper hergestellt ist, ohne dass nachträgliche Fügeprozesse wie Kleben, Schrauben oder Einclipsen erforderlich sind. Eine solche einstückige Ausführung gewährleistet eine kraftschlüssige und toleranzfreie Verbindung zwischen der Vorrichtung 40 und dem Sensor 9, wodurch eine präzise und dauerhaft stabile Positionierung sichergestellt wird. Gleichzeitig reduziert sich der Montageaufwand, was insbesondere im Rahmen automatisierter Fertigungslinien von Vorteil ist.

Ein weiterer Vorteil der einstückigen Ausführung liegt darin, dass sich Kraftflüsse aus der Feder 50 direkt in die umschließende Sensorstruktur einleiten lassen, ohne dass Material- oder Geometrieübergänge als potenzielle Schwachstellen auftreten. Dies verbessert die mechanische Robustheit der gesamten Sensorbaugruppe und erhöht die Lebensdauer unter zyklischer Belastung. Darüber hinaus eröffnet die einstückige Integration konstruktive Freiheitsgrade, um z. B. zusätzliche Funktionen wie Dichtlippen, Rastnasen oder Steckkonturen direkt mit auszubilden.

Auf der in Radialrichtung 46 gesehenen Vorderseite ist die Grundkörperwand 62 im Bereich einer Anbindungsstelle an den Sensor 9 mit einer konkaven Wölbung 68 zur in der Radialrichtung 46 gesehenen Vorderseite in den Innenraum hinein ausgebildet. In gleicher Weise besitzt die Wand an der in der Radialrichtung 46 gesehenen Außenseite eine weitere Wölbung 70 in den Innenraum 64 hinein, so dass die beiden Wölbungen 68, 70 aufeinander zu gerichtet sind und mit einem nicht weiter referenzierten jeweiligen Maximum aufeinander zu zeigen. An diesen Maxima ist der Innenraum 64 des Grundkörpers 48 mit einer Strebenwand 72 verstrebt.

Die konkaven Wölbungen 68, 70 und ihre Verbindung durch die Strebenwand 72 wirken als lokale Versteifungseinheit, welche die Grundkörperwand im Bereich der Anbindungsstelle gezielt stabilisiert. Durch die Formgebung entsteht eine doppelschalige Struktur mit strebenartiger Verbindung, die in ihrer Wirkung mit einem lokalen Rippen- oder Sandwichaufbau vergleichbar ist. Insbesondere bei Torsions- oder Biegebeanspruchung des Grundkörpers kann die Strebenwand auftretende Kräfte flächig in die umliegende Wandstruktur einleiten, wodurch Spannungskonzentrationen vermieden und Materialermüdung reduziert werden.

Da die Anbindungsstelle an den Sensor 9 auf der in Radialrichtung 56 gesehenen Rückseite der Vorrichtung 40 angeordnet ist, wirkt es als zentraler Kraftübertragungspunkt zwischen Sensor 9 und Vorrichtung 40. Die Verstrebung im Bereich der Wölbungsmaxima unterstützt die mechanische Anbindung und sorgt für eine gerichtete Rückführung der dort eingeleiteten Kräfte, insbesondere aus dem Federarm 54. Die Wölbungen übernehmen dabei die Funktion eines kraftflussleitenden Volumens, ähnlich einem Formschlusskörper oder einer geformten Lastpfadführung.

Durch die konkave Form auf beiden Seiten der Grundkörperwand 62 lässt sich das Material lastgerecht anordnen, ohne dass massive Wandstärken erforderlich sind. Das spart Gewicht und Materialkosten - bei gleichzeitig hoher Steifigkeit. Die symmetrische Formgebung unterstützt außerdem eine gleichmäßige Bauteilabkühlung im Spritzguss und reduziert das Risiko von Einfallstellen oder Verzug.

Die konkaven Wölbungen dienen zusätzlich als Montage- oder Führungsmerkmale - z. B. zur axialen Positionierung in einem Sensorträger oder als Anlageflächen für Dichtungen, Rastnasen oder Führungshülsen. Durch die zentrale Strebenwand ergibt sich eine definierte Anlagefläche, die auch für zusätzliche Funktionselemente genutzt werden könnte (z. B. Clips, Zentrierstifte etc.).

Die Grundkörperwand 62 besitzt an ihrer in der Umfangsrichtung 44 gesehenen Vorderseite eine sich von der Axialrichtung 42 her gesehenen Unterseite nach oben hin erstreckende Axialaussparung 74 mit einem in der Axialrichtung 74 gesehenen am oberen Ende angeordneten Ausparungsboden 76, der die verbleibende Grundkörperwand 62 in der Radialrichtung 64 verbindet. Auf diesem Aussparungsboden 76 steht oder besser gesagt hängt die Feder 50 entgegen der Axialrichtung 42, so dass der Aussparungsboden 76 an dieser Stelle als das Haltelager dient. Die Feder 50 steht mit ihrem Federarm 54 im entspannten Zustand in der Umfangsrichtung 44 gesehen auf gleicher Höhe mit der Grundkörperwand 62 und kann sowohl in den Innenraum 64 hinein als auch in den Außenraum 66 verschwenkt werden.

Sollte die Feder 50 vor einer Überdehnung geschützt werden müssen, so kann durch eine geeignete Anordnung der Strebenwand 72 oder durch weitere Anschlagmittel eine Bewegungsbegrenzung der Feder 50 entgegen der Umfangsrichtung 44 erzwungen werden.

Zur Fixierung in der Axialrichtung 42 kann am dem Federfuß 56 gegenüberliegenden Ende der Feder 50 ein Haken 78 ausgebildet sein, der einen entgegen der Axialrichtung 42 gesehenen Hinterschnitt schafft, der einen Formschluss mit einem geeigneten Gegenmittel am ortsfest zum Chassis 5 gehaltenen Sensorträger eingehen kann. So Grobpositionierung der Vorrichtung 40 können am Grundkörper 48 sich in und entgegen der Umfangsichtung 44 erstreckende Positionierungswande 80 ausgebildet sein.

Es wird nun mit Bezug auf Fig. 5 eine Weiterbildung der Vorrichtung 40 beschreiben, bei der der Federarm 54 der Feder 50 an seinen in der Axialrichtung 42 gesehenen Enden jeweils einen Federfuß 56 besitzt, so dass die Feder 50 an zwei Enden mit dem Grundkörper 48 fixiert ist. Die Elastizität wird durch ein Aufbrechen des oben erläuterten Aussparungsboden 76 erreicht, so dass zwei Aussparungen 74 gebildet sind, die sich in der Axialrichtung 42 gesehen in entgegengesetzten Richtungen in die Grundkörperwand 62 hinein erstrecken. Und letztendlich zwei Aussparungsböden 76 gebildet sind.

Auf diese Weise wird zum einen wird der Federarm 54 nicht mehr als freitragender Kragarm, sondern als beidseitig eingespannte Biegebalkenstruktur ausgebildet, was zu einer symmetrischeren Spannungsverteilung im Werkstoff und damit zu einer höheren Dauerfestigkeit führt. Die Übergangsbereiche der Federfüße 56 in die Ausparungsböden 76 sind in Fig. 5 durch den Verlauf der Grundkörperwand 62 geometrisch geschützt und kraftflussoptimiert eingebettet, was die Gefahr lokaler Spannungsspitzen und Ermüdungsbrüche weiter reduziert.

Zum anderen erlaubt die doppelte Lagerung eine definiertere Bewegungskinematik des Federarms 54, da dieser bei Auslenkung um die Umfangsrichtung 44 symmetrisch be- und entlastet wird. Dies verbessert das Rückstellverhalten und erhöht die Reproduzierbarkeit der Federkennlinie auch bei thermischen oder dynamischen Belastungen. Die Integration beider Lagerpunkte in die Wandstruktur des Grundkörpers 48 ermöglicht darüber hinaus eine sehr kompakte Bauweise, da der Federarm 54 vollständig innerhalb der Wanddicke der Grundkörperwand 62 geführt ist.

Zusätzlich entsteht durch die beidseitige Verankerung die Möglichkeit, weitere Funktionselemente - etwa Dämpfungselemente, Anschläge oder Positionierhilfen - zwischen den beiden Lagerpunkten zu integrieren. Die Feder 50 wird so zu einem strukturellen Bauelement, das nicht nur Rückstellkräfte auf den Sensorträger überträgt, sondern auch aktiv zur mechanischen Stabilität der Vorrichtung 40 beiträgt.

### Bezugszeichenliste

- 1: Fahrzeug
- 2: Lenksystem
- 3: Vorderräder
- 4: Hinterräder
- 5: Chassis
- 6: Lenkrad
- 7: Erste Lenkwelle
- 8: Rotationsachse
- 9: Sensor
- 10: Torsionselement
- 11: Zweite Lenkwelle
- 12: Lenkgetriebe
- 13: Lenkmoment
- 14: Radeinschlag
- 15: Hilfsmotor
- 16: Drehwinkelunterschied
- 17: Feinspur
- 18: Grobspur
- 19: Messschaltung
- 20: Steuereinrichtung
- 21: Steuersignal
- 22: Drehwinkel (Gesamtlenkwelle)
- 23: Tragehülse
- 24: Antriebsrad
- 25: Abtriebsrad
- 26: Multiwinkelerfassungseinrichtung
- 27: Feinspurflügel
- 28: Feinspurträger
- 29: Grobspurflügel
- 30: Grobspurträger
- 31: Feinspurseite
- 32: Grobspurseite
- 33: Feinspursignal
- 34: Grobspursignal
- 36: Magnet
- 37: Magnetsensorelement
- 38: Ausgabeschnittstelle
- 39: Herkömmliche Vorrichtung
- 40: Erfindungsgemäße Vorrichtung
- 42: Axialrichtung
- 44: Umfangsrichtung
- 46: Radialrichtung
- 48: Grundkörper
- 50: Feder
- 52: Haltelager
- 54: Federarm
- 56: Federfuß
- 58: Erste Federarmseite
- 60: Zweite Federarmseite
- 62: Grundkörperwand
- 64: Innenraum
- 66: Außenraum
- 68: Innere Wölbung
- 70: Äußere Wölbung
- 72: Strebenwand
- 74: Axialaussparung
- 76: Ausparungsboden
- 78: Haken
- 80: Positionierungswand

## Patentansprüche

1. Vorrichtung (40) zur Lagesicherung einer einen Drehwinkel zwischen einem Rotor und einem Stator bestimmenden Drehwinkelsensor (9) gegenüber einem Sensorträger um eine Rotationsachse (8), umfassend:
- einen Grundkörper (48),
- ein in Umfangsrichtung (44) um die Rotationsachse (8) gesehenes torsionssteifes Haltelager (52) zum Aufnehmen einer Torsionskraft aus dem Drehwinkelsensor (9), und
- eine am Haltelager (52) gehaltene Feder (50), die eingerichtet ist, eine Rückstellkraft auf den Sensorträger aufzubringen, mit wenigstens einem Federfuß (56) und einem sich in Bezug auf die Rotationsachse (8) zumindest teilweise axial (42) erstreckenden Federarm (54), welcher in Umfangsrichtung (44) um die Rotationsachse (8) gesehen eine nach vorn ausgerichtete Federarmseite (58) und der nach vorn ausgerichteten Federarmseite gegenüberliegende, nach hinten ausgerichtete Federarmseite (60) umfasst,
**dadurch gekennzeichnet, dass**
- der Federfuß (56) sowie wenigstens eine der Federarmseiten (58, 60) innerhalb des Grundkörpers (48) angeordnet sind.

2. Vorrichtung (40) nach Anspruch 1, wobei der Grundkörper (48) in Bezug auf die Rotationsachse (8) in einer Axialrichtung (42) gesehen eine umlaufende Grundkörperwand (62) umfasst, innerhalb der der Federarm (54) angeordnet ist.

3. Vorrichtung (40) nach Anspruch 2, wobei die Grundkörperwand (62) eine in Axialrichtung (42) der Rotationsachse (8) gesehene Aussparung (74) besitzt, innerhalb der der Federarm (54) angeordnet ist.

4. Vorrichtung (40) nach Anspruch 3, wobei der Federfuß (56) auf einer in Axialrichtung (42) der Rotationsachse (8) gesehenen Bodenseite (76) der Aussparung (74) angeordnet ist.

5. Vorrichtung (40) nach einem der Ansprüche 2 bis 4, wobei der Federarm (54) in einem entspannten Zustand parallel zur Grundkörperwand (62) ausgerichtet ist.

6. Vorrichtung (40) nach einem der Ansprüche 2 bis 5, wobei innerhalb der Grundkörperwand (62) eine vorzugsweise radial (46) zur Rotationsachse (8) ausgerichtete Versteifungsrippe angeordnet ist.

7. Vorrichtung (40) nach einem der Ansprüche 2 bis 6, wobei die Grundkörperwand (62) im Bereich des Haltelagers (52), gesehen von der Rotationsachse (8), konkav ausgebildet ist.

8. Vorrichtung (40) nach einem der Ansprüche 2 bis 7, wobei die Grundkörperwand (62), gesehen von der Rotationsachse (8) aus dem Haltelager (52) gegenüberliegend, eine in einen durch die Grundkörperwand (62) umschlossenen Innenraum (64) hinein gerichtete Wölbung (70) aufweist.

9. Vorrichtung (40) nach einem der vorstehenden Ansprüche, wobei der Grundkörper (48) in Umfangsrichtung (44) um die Rotationsachse (8) gesehen an der Rückseite und/oder an der Vorderseite eine in Umfangsrichtung (44) ausgerichtete Anschlagwand (80) besitzt.

10. Drehwinkelsensor (9) zum Erfassen eines Drehwinkels zwischen einem Rotor und einem Stator, umfassend den Rotor und den Stator mit einem Gehäuse und einer Leiterplatte (19) zur Auswertung eines vom Rotor beeinflussten Geberfeldes, sowie eine Vorrichtung (40) nach einem der vorstehenden Ansprüche, zum Sichern einer Drehlage des Gehäuses gegenüber einem Sensorträger um eine Rotationsachse (8).
